# EUROPEAN PATENT APPLICATION

(11) **EP 4 501 115 A1**
(43) Date of publication of application: **05.02.2025**
(21) Application number: 23778565.4
(22) Date of filing: 31.03.2023
(51) Int. Cl.: A21D 13/33, B65D 65/46

(54) **EDIBLE FOOD CONTAINER, MANUFACTURING METHOD AND USE THEREOF**

(30) Priority: 31.03.2022 ES 202230291
(71) Applicant: Márquez Silva, Belén, 11650 Villamartín Cádiz (ES)
(72) Inventor: Márquez Silva, Belén, 11650 Villamartín Cádiz (ES)
(74) Representative: Ungria López, Javier
(86) International application number: PCT/ES2023/070213
(87) International publication number: WO 2023/187245

(57) **Abstract**

A first aspect of the present invention relates to an edible container for containing food products which can be cold or hot fluids, and preferably, hot fluids having a temperature between 50° and 98°C. A second aspect of the present invention relates to a method for producing an edible container. The last aspect of the present invention is the use of the edible container according to the first aspect of the invention for containing food products, preferably, hot fluids having a temperature between 50° and 98°C.

## Description

### TECHNICAL SECTOR

The present invention falls within the sector of the food industry, and relates to a new container that is especially suitable for use in the production of edible containers for hot or cold fluids.

### BACKGROUND OF THE INVENTION

The use of disposable containers made of plastic and/or cardboard is widely practised in the food industry, as it offers a number of advantages. First, the use of this type of utensils and containers saves time compared to the organization and cleaning of glass or ceramic crockery, mainly when it is necessary to look after a large number of people. Furthermore, plastic tableware is much cheaper and easier to transport compared to tableware made of glass or ceramic. Likewise, the use of these waste plastic products has also gained great importance in the recent health crisis caused by COVID-19, since it has become necessary to use disposable tableware, mainly for take-away food, thus ensuring a safe and hygienic service.

Nevertheless, there is great concern about the chemical components found in plastic and/or cardboard food containers. At the user level, there is a risk that some of these components will be transferred to the contents of the food they transport. And at the environmental level, the accumulation of plastic waste in natural environments has serious consequences for the ecosystem.

Today, various plastic and/or cardboard materials which are safe for users from a health standpoint because of their composition, are being studied. At the same time, significant progress is also being made in industrial processes to facilitate the recycling of these types of materials.

Nevertheless, these methods and advances in the development of ecological plastic and cardboard materials continue to be the subject of study for the industrial sector since they involve a high energy expenditure, both for their manufacture and for their degradation and recycling.

On this basis, within the food industry, disposable and edible containers which overcome not only the toxic effects for the user and the planet, but also provide significant energy savings by avoiding the manufacture of plastic materials and their subsequent processing after they have been discarded, have been developed.

Below are some relevant examples of the use of suitable materials for the production of degradable and edible materials that can be used in the manufacture of cups or containers for food and/or beverages:
- Patent US10575536B2, entitled "Edible glass and method of making the same", relates to a method for obtaining an edible container made of liquid, sugar, and one or more hydrocolloids. The edible container may hold hot or cold liquids for extended periods of time.
- Patent application US6068866A, entitled "Cup for drinks made of edible twice-baked pastry", relates to an edible cup made of twice-baked pastry having an impermeable layer consisting essentially of sugar, water, starch and gum capable of containing hot and cold drinks without losing its structural hardness and without any liquid spillover.
- Patent FR2437996A1, entitled "Package for industrially made cream or yoghurt dessert - in biscuit cup with easily removable protective cover", relates to an edible cup made of sweet biscuit and filled with a dessert cream, ice cream, yoghurt, etc. The biscuit cup is lined with a thin coating of chocolate, glazed sugar or icing sugar so that the biscuit is protected from moisture in the filling. The cup fits into an annular crown made of plastic, foil, cardboard, etc. The bottom of the cup is protected by a disc, which can be pushed up to remove the product from the mould.
- Patent application DE-A-4218392, entitled "Method for obtaining a container made of edible and/or decomposable material by forming a dough with flour, water, starch, oil and macromolecule, for example, xanthan, fed by pressing with water and baked", relates to a method of manufacturing the container comprising feeding an agent (I) (which forms macromolecules) in relation to the dry mass of the other constituents and mixing them with it. The other components are then mixed and the completed dough is pressed into a container shape and baked simultaneously, in preference (I), xanthan or carob powder is used, and guar flour or pectin is mixed with water before adding the other components.
- Patent application US2014161944A1, entitled "Edible cup and method of making the same", describes an edible container made of agar, cane sugar, water, light corn syrup, fruit or vegetable juice, a flavouring agent and a colouring agent. The edible container may hold hot or cold liquids for extended periods of time.

Nevertheless, none of these containers have shown sufficient waterproof capacity to withstand beverages at a high temperature for a prolonged period of time.

Based on the foregoing points, there is a need in this technical field to have new containers or cups with good mechanical properties and that are edible, so they are capable of containing both hot and cold fluids for an extended period of time.

### SUMMARY OF THE INVENTION

The present invention relates to a novel edible container for containing food, hot or cold beverages, and it is especially suitable for containing hot beverages for a prolonged period of time.

This edible container is made of a paste whose ingredients are edible, and that comprises a coating that extends over the entire inner surface of the container. This coating enables the edible container described herein to be capable of containing beverages, and in particular, hot beverages for a period of time that is surprisingly longer than the edible containers known in the prior art.

Therefore, in a first aspect, the invention relates to an edible container for containing food or fluids which is composed of a dough comprising the following components:
a) between 50% and 56% flour,
b) between 22% and 32% fat,
c) between 12% and 16% sugar, and
d) between 5% and 6% pasteurised egg or between 0.1% and 1% soy lecithin,
e) between 0.1 % and 0.2% salt;
and having the shape of a hollow body, and wherein its inner surface has a coating comprising:
a) between 99.3% and 99.5% water,
b) between 0.7% and 0.5% of a gelling composition.

Secondly, the invention relates to a method for producing an edible container, wherein said method comprises the following steps:
a) mixing an amount comprised between 50% and 56% of flour with an amount comprised between 12% and 16% of sugar until producing a first homogeneous mixture;
b) mixing an amount comprised between 5% and 6% of pasteurised egg or an amount comprised between 0.1 and 1% of soy lecithin, and an amount comprised between 22% and 32% of fat until producing a second homogeneous mixture,
c) mixing the first and the second mixture until producing a homogeneous dough;
d) letting the dough rest for a period of time comprised between 60 and 120 minutes at a temperature of between 3 and 8°C;
e) rolling out the dough until producing a dough with a thickness of between 2 mm and 4 mm;
f) shaping a container with a portion of the rolled-out dough;
g) placing the container produced in the previous step in an oven-safe mould and baking for a time comprised between 10 and 120 minutes at a temperature of between 170 and 200°C;
h) removing the container produced in the previous step from the mould and leaving it to cool on a rack for a time comprised between 45 and 180 minutes at a temperature of between 15 and 25°C;
i) producing the coating by means of the following sub-steps:
   i.1) mixing between 99.3% and 99.5% of water with an amount of between 0.5% and 0.7% of a gelling composition,
   i.2) heating to a temperature of between 95°C and 105°C and mixing for a time of between 30 and 180 seconds until producing a homogeneous solution;
   i.3) leaving the homogeneous solution to cool until reaching a temperature of between 25 and 40°C;
j) evenly distributing the coating produced in the previous step on the inner surface of the container by means of a brush or by spraying;
k) leaving the container to cool for a period of time of between 30 and 60 minutes at a temperature of between 15 and 25°C.

In a third aspect, the invention relates to the use of an edible container according to the first aspect of the invention for containing a food product.

In a last aspect, the invention relates to the use of an edible container according to the first aspect of the invention for containing a fluid having a temperature comprised between 50 and 98°C, between 24 and 36 hours.

### BRIEF DESCRIPTION OF THE FIGURES

Possible embodiments of this edible container have been represented at the end of the present specification for illustrative and non-limiting purposes. These drawings are intended to complement the description of the invention in a summarised manner:

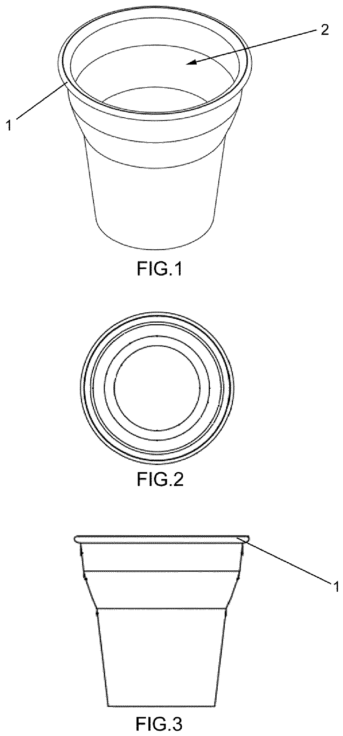

- Figure 1 shows a perspective view of an edible container according to a preferred embodiment.
- Figure 2 shows a plan view of an edible container according to a preferred embodiment.
- Figure 3 shows a front view of an edible container according to a preferred embodiment.

Furthermore, the references numbers are:
1.- Opening;
2.- Inner surface of the edible container.

### DETAILED DESCRIPTION OF THE INVENTION

As explained above, the inventors, after carrying out numerous experiments and tests, propose a novel edible container for containing food, hot or cold beverages, and it is especially suitable for containing hot beverages having a temperature between 50°C and 98°C without compromising its mechanical properties. This is achieved by means of its composition and a coating film on the inner surface of said container.

Its main application is designed for the food sector, since, as a result of its composition and the method by which it is produced, it is an edible container that is surprisingly impermeable and more resistant and preservable, being capable of withstanding fluids having a maximum temperature of 98°C.

Therefore, the invention relates to an edible container for containing food or fluids, having the shape of a hollow body and composed of a dough comprising the following components:
a) between 50% and 56% flour,
b) between 22% and 32% fat,
c) between 12% and 16% sugar, and
d) between 5% and 6% pasteurised egg or between 0.1% and 1% soy lecithin,
e) between 0.1% and 0.2% salt;
and wherein said container has on its inner surface a coating comprising:
a) between 99.3% and 99.5% water,
b) between 0.5% and 0.7% of a gelling composition.

The invention also relates to the method of producing this new edible container and to its use for containing hot or cold foods and/or fluids. The result is a novel edible food container with an impermeable behaviour that is capable of containing especially hot beverages having a maximum temperature of 98°C for an extended period of time. Furthermore, as a result of its composition, it can be stored for an extended period of time.

In embodiments of the invention, the storage period is 20 to 40 days, and preferably 25 to 30 days, and even more preferably 30 days, at ambient temperature.

In the present invention, ambient temperature is understood to be a temperature comprised between 18°C and 25°C, preferably being between 20°C and 25°C, more preferably between 22°C and 23°C, and even more preferably at 22°C.

In the context of the present invention, impermeability is understood as the capacity of a material to prevent a fluid from passing through it. A material is said to be permeable if it allows a significant amount of fluid to pass through it in a given time, and impermeable or non-permeable if the amount of fluid is negligible.

Furthermore, in the context of the present invention, edible is understood to mean a product that is suitable for human or animal consumption.

### Products of the invention

In a first aspect, the invention relates to an edible container for containing food or fluids, which is composed of a dough comprising the following components:
a) between 50% and 56% flour,
b) between 22% and 32% fat,
c) between 12% and 16% sugar, and
d) between 5% and 6% pasteurised egg or between 0.1% and 1% soy lecithin,
e) between 0.1% and 0.2% salt;
and having the shape of a hollow body, and wherein its inner surface has a coating comprising:
a) between 99.3% and 99.5% water,
b) between 0.5% and 0.7% of a gelling composition.

All percentages are by weight with respect to the total.

In the embodiments of the invention, the flour is selected from the group consisting of soft wheat flour, corn flour, fine corn flour, oat flour, rice flour or a combination thereof. In a preferred embodiment of the present invention, the dough comprises soft wheat flour. In another preferred embodiment of the present invention, the flour can be fine corn flour, also known as cornstarch.

In the context of the present invention, soft flour is understood to be a type of flour characterised in that it has a protein content comprised between 7% and 9%, preferably 7%, 8% and 9%. In a preferred embodiment of the present invention, the flour that the dough comprises is soft flour, which in the context of the present invention is a special type of flour for baking that is very fine and that has very little strength, with a flour strength of 60-120 W. It should be noted at this point that the unit of measurement of flour strength is indicated by W, which is the ability of the dough to withstand the pressure of the gas generated by fermentation. The use of this type of flour does not require fermentation, so the dough resulting from this type of flour is easier to handle and roll out.

In a particular embodiment of the present invention, the fat comprised in the dough may be solid or semi-solid fat. In preferred embodiments of the present invention, the fat is selected from the group consisting of margarine, refined lard, sunflower oil or a combination thereof. In preferred embodiments of the present invention, the fat is margarine.

The margarine used within the present invention may comprise a fat content of between 40% and 70%. In a preferred embodiment, the margarine contains a fat content that is less than or equal to 70%. In other embodiments, the amount of fat contained in the margarine is between 45% and 65%, preferably between 50% and 60%. In other embodiments of the invention, the amount of fat contained in the margarine is 40%, 45%, 50%, 55%, 60%, 65% or 70%.

It should be noted that margarine is a fat made from vegetable oils, therefore it contains unsaturated fats, both polyunsaturated and monounsaturated fats, which are very beneficial for health, as they help reduce low-density lipoprotein (LDL) cholesterol.

In other preferred embodiments of the present invention, the dough may contain soy lecithin in an amount comprised between 0.1% and 1%, and preferably it can be 0.1%, 0.2%, 0.3%, 0.4%, 0.5%, 0.6%, 0.7%, 0.8%, 0.9%, and 1%.

In the present invention, all percentages are given by weight with respect to the total, and the sum of the components in the dough may be less than or equal to 100%.

In a particular embodiment, the composition of the invention has a mass of at least 1 kg. Therefore, the dough for making the container object of the invention may comprise a minimum quantity of 1 kg of dough for making the mixtures and applying the percentages indicated above, in order to be able to carry out the kneading process with sufficient looseness and facilitate homogeneous mixing of the components.

The sugar used within the present invention has a particle size of less than or equal to 600 microns, and it comprises an amount of starch comprised between 1.5 and 4% with respect to the total weight of the sugar.

In a preferred embodiment, the particle size of the sugar is between 400 and 600 microns in diameter. In other embodiments of the invention, the particle size of the sugar is 400 - 550 microns, 450 - 500 microns, 475 - 500 microns. In some embodiments, the particle size of the sugar is 400, 450, 500, 550 or 600 microns.

In a preferred embodiment, the sugar used within the present invention comprises an amount of starch less than or equal to 4% with respect to the total weight of the sugar. In some embodiments, the amount of starch is 1.5% - 4%, 2% - 3.5%, and preferably 2% - 3%. In other embodiments of the invention, the amount of starch is 1.5%, 2%, 2.5%, 3%, 3.5% or 4%.

The dough of the edible container object of the present invention comprises pasteurised egg, which in the context of the present invention is understood to be a product in fluid state produced from the egg once the shell and membranes have been removed. The use of pasteurised eggs has the advantage of guaranteeing the removal of pathogenic microorganisms that may be found in the egg, mainly from *Salmonella.*

In a particular embodiment, the dough additionally comprises between 0.15% and 0.3% of at least one preservative and/or flavouring relative to the total weight of the dough to improve its organoleptic characteristics. In a preferred embodiment, the amount of at least one preservative and/or flavouring comprised in the dough may be 0.15%, 0.2%, 0.25% and 0.3%. In the context of the present invention, preservatives and/or flavourings typical for baking are used.

As indicated, the invention consists of an edible container for containing food, and preferably for containing hot or cold fluids. This container has a number of technical features such as a surprising improvement in its waterproof capacity compared to other edible containers on the market, allowing it to withstand fluids with temperatures up to a maximum of 98°C without excessively diminishing its mechanical properties.

As a result of the chemical nature of each of the components and the homogeneous mixture of all of them during the production process explained below, a stitching effect occurs, preventing the dough from cracking or breaking at any point, resulting in a more resistant and durable edible container during the storage period, allowing storage for considerably more extended periods than other products in the prior art. In some embodiments of the present invention, the storage periods of the container object of the invention are up to a maximum of 40 days.

In some embodiments of the present invention, the container according to the first aspect of the present invention comprises a coating that covers the entire inner surface of the container, which in the context of the present invention comprises the inner surface of the side wall and the bottom of the container.

In particular embodiments of the present invention, the inner surface of the container comprises a coating which is composed of:
a) between 99.3% and 99.5% water,
b) between 0.5% and 0.7% of a gelling composition.

In preferred embodiments of the present invention, the inner surface of the container object of the invention has a coating that may comprise 0.5%, 0.6% or 0.7% of a gelling composition.

In particular embodiments of the present invention, the gelling composition comprised in the coating is composed of:
a) between 50% and 70% agar-agar,
b) between 29% and 49% arrowroot,
c) between 0.5% and 1% cream of tartar.

In some embodiments of the present invention, agar-agar is a gelatin that comes from a seaweed of the same name and can thicken fluids into the form of a very nutritious gelatin, in other words, it can turn fluid into gel. In some embodiments of the present invention, the gelling composition comprises an amount of agar-agar of 50-70%. In preferred embodiments, the gelling composition comprises an amount of agar-agar of 55%-60%. In preferred embodiments of the present invention, the gelling composition comprises an amount of agar-agar which may be 50%, 51%, 52%, 53%, 54%, 55%, 56%, 57%, 58%, 59% or 60%. In preferred embodiments of the present invention, the gelling composition comprises an amount of agar-agar which may be 61%, 62%, 63%, 64%, 65%, 66%, 67%, 68%, 69% or 70%.

In embodiments of the present invention, arrowroot is a food used as a thickener. It is used as a thickener in foods such as desserts, jams, cake fillings, gluten-free breads, vegan yoghurt, vegan kefir, stews or sauces. In embodiments of the present invention, the gelling composition comprises an amount of arrowroot of 29-49%. Furthermore, in embodiments of the present invention, the amount of arrowroot is between 35% - 45%, and more preferably between 40% - 45%. In particular embodiments of the present invention, the amount of arrowroot can be 29%, 30%, 31%, 32%, 33%, 34%, 35%, 36%, 37%, 38%, 39%, 40%, 41%, 42%, 43%, 44%, 45%, 46%, 47%, 48% or 49%.

In embodiments of the present invention, cream of tartar is the additive called E-334, and it is used mainly as an ingredient in the baking powder used in baking, in the wine industry as a wine acidity corrector, as well as for the making carbonated beverages such as soda. In some embodiments of the present invention, the gelling composition comprises an amount of cream of tartar of between 0.5 and 1%. Furthermore, in embodiments of the present invention, the amount of cream of tartar can be 0.5%, 0.6%, 0.7%, 0.8%, 0.9% or 1%.

Furthermore, in embodiments of the present invention, the container according to the first aspect of the invention has a wall the thickness of which is comprised between 2 mm and 4 mm, preferably being between 2 and 3.5 mm, 2 and 3 mm, 2.5 mm and 3 mm. In embodiments of the invention, the thickness of the wall is 2 mm, 2.5 mm, 3 mm, 3.5 mm or 4 mm.

In a more preferred embodiment, the container according to the first aspect of the invention contains fluids having a temperature of up to a maximum of 98°C. In preferred embodiments, the liquids can be at a temperature comprised between 50°C and 98°C. In these cases, the container according to the first aspect of the invention is capable of containing fluids with temperatures of up to 98°C for a period of more than 24 hours without losing its mechanical properties. In preferred embodiments, the period of time that the container can hold fluids at the temperature indicated herein is comprised between 24 and 36 hours without losing its mechanical properties. In even more preferred embodiments, the period of time can be between 28 and 35 hours, and even more preferably between 30 and 33 hours.

Preferably, the liquids can be at a temperature comprised between 80° and 98°, preferably between 85°C and 96°C, and even more preferably between 90°C and 95°C. In preferred embodiments, the fluids comprised in the edible container may be at a temperature of 80°C, 81°C, 82°C, 83°C, 84°C, 85°C, 86°C, 87°C, 89°C or 89°C. In other embodiments of the present invention, the fluids comprised in the edible container may be at a temperature of 90°C, 91°C, 92°C, 93°C, 94°C, 95°C, 96°C or 98°C.

In a preferred embodiment, the container according to the first aspect of the invention contains fluids having a temperature of between 80° and 98°C for a period of more than 24 hours without losing its mechanical properties.

In the context of the present invention, that the container object of the invention maintains its mechanical properties, as indicated above, means that the container, when containing a liquid at a temperature of up to a maximum of 98°C, is capable of maintaining its structure and initial shaping for a period of time exceeding 24 hours, and preferably from 24 to 36 hours. Furthermore, in this context, the inventors have been able to verify that during that period of time, the wall of the container does not deform or break, maintaining its consistency and avoiding the loss of the fluid it contains. Furthermore, in the context of the present invention, mechanical properties refer to the fact that the edible container object of the invention is waterproof and very resistant, so it does not deform, crack or break under the temperature and time conditions described herein.

The effects observed after the tests carried out on the target container of this invention confer to it a series of mechanical properties that differentiate it from other edible containers on the market.

Being edible means that the container object of the invention does not give rise to any type of waste. Nevertheless, as a result of the composition thereof, the container according to the first aspect of the invention is also biodegradable. In the context of the present invention, a biodegradable product is understood to be a non-polluting product which can be destroyed by microorganisms, by the sun, rain, wind, and humidity. As a result of their components, products of this type decompose naturally, without the intervention of any artificial procedure, thus avoiding toxic waste being left in nature.

In embodiments of the present invention, the edible container is a hollow body that is formed by a bottom and a side wall that includes a perimeter rim that delimits an opening. In other preferred embodiments, the edible container is a hollow body that is formed by a circular bottom and a side wall that includes a perimeter rim that delimits a circular mouth, preferably being an edible container that can be in the form of a bowl, cup or mug for the various uses that can be given to it to contain food. In a more preferred embodiment, the edible container comprises a first truncated cone section that includes the bottom, a second truncated cone section and a third truncated cone section that leads to the outwardly protruding perimeter rim with a rounded profile.

In particular embodiments, the edible container object of the invention is a hollow body that can be shaped like a cylinder or a truncated cone. In other particular embodiments, the container object of the invention is a hollow body that is formed by a bottom, which can be circular, triangular, quadrangular, and hexagonal, and consequently, it can have a single side wall or three, four, five or six side walls, respectively, that include a perimeter rim that delimits an opening.

Therefore, in particular embodiments the container has a height (h) comprised between 3 cm and 14 cm, preferably between 5 and 12 cm. In preferred embodiments, the height (h) of the container can be 3 cm, 4 cm, 5 cm, 6 cm, 7 cm, 8 cm, 9 cm, 10 cm, 11 cm, 12 cm, 13 cm or 14 cm.

In other particular embodiments, when the container is shaped like a cylinder or a truncated cone, the diameter can be between 4 cm and 10 cm, preferably being between 5 cm an 8 cm. In preferred embodiments, the diameter of the container can be 4 cm, 5 cm, 6 cm, 7 cm, 8 cm, 9 cm or 10 cm. In particular embodiments of the present invention, the diameter of the container is the same at all its heights, so the container is shaped like a cylinder.

### Methods of the invention

Furthermore, another object of the present invention is the method of making the edible container especially suitable for containing food or fluids described herein. Therefore, in one aspect, the invention also relates to a method for producing an edible container, wherein said method comprises the following steps:
a) mixing an amount of between 50% and 56% of flour with an amount comprised between 12% and 16% of sugar until producing a first homogeneous mixture;
b) mixing an amount comprised between 5% and 6% of pasteurised egg or an amount comprised between 0.1 and 1% of soy lecithin, and an amount comprised between 22% and 32% of fat until producing a second homogeneous mixture,
c) mixing the first and the second mixture until producing a homogeneous dough;
d) letting the dough rest for a period of time comprised between 60 and 120 minutes at a temperature of between 3 and 8°C;
e) rolling out the dough until producing a dough with a thickness of between 2 mm and 4 mm;
f) shaping a container with a portion of the rolled out dough;
g) placing the container produced in the previous step in an oven-safe mould and baking for a time comprised between 10 and 120 minutes at a temperature of between 170 and 200°C;
h) removing the container produced in the previous step from the mould and leaving it to cool on a rack for a time comprised between 45 and 180 minutes at a temperature of between 15 and 25°C;
i) producing the coating by means of the following sub-steps:
   i.1) mixing between 99.3% and 99.5% of water with an amount comprised between 0.5% and 0.7% of a gelling composition,
   i.2) heating to a temperature of between 95°C and 105°C and mixing for a time comprised between 30 and 180 seconds until producing a homogeneous solution;
   i.3) leaving the homogeneous solution to cool until reaching a temperature comprised between 25 and 40°C;
j) evenly distributing the coating produced in the previous step on the inner surface of the container by means of a brush or by spraying;
k) leaving the container to cool for a period of time comprised between 30 and 60 minutes at a temperature of between 15 and 25°C.

In preferred embodiments, the method comprises an additional step prior to step b) wherein an amount between 0.15% and 0.3% of at least one preservative and/or flavouring is added.

In preferred embodiments of the method, in step f) the container is shaped by means of a mould. In another preferred embodiment, shaping the container comprises the following steps:
- using a dough cutter to cut a first piece from the rolled out dough portion;
- using the dough cutter to cut at least a second piece from the rolled out dough portion;
- joining the first piece and at least the second piece by means of pressure to shape the container, wherein the first cut piece defines a bottom of the container and the second cut piece defines a wall of the container.

In preferred embodiments of the method object of the invention, there is an additional step between steps f) and g), wherein the container produced in step f) is left to stand for a time comprised between 45 and 120 minutes at a temperature of between 3 and 8°C.

In a preferred embodiment of the present invention, in which the container is manufactured by hand, in step c), once a homogeneous dough is produced, it is shaped into a cylinder with a diameter of between 5 and 10 cm. Next, in step d) the dough cylinder is left to rest for a period of time comprised between 45 and 120 minutes at a temperature of between 3 and 8°C. Next, there is an intermediate step between steps d) and e) in which cuts are made in the dough cylinder perpendicular to the longitudinal axis of the cylinder forming discs with a thickness of between 1.5 and 4 cm, preferably between 2 and 3 cm, and the discs are left to stand for a period of time comprised between 45 and 120 minutes at a temperature of between 3 and 8°C. And finally, in step e) the discs are rolled out until producing doughs with a thickness of between 2 mm and 4 mm.

In a particular embodiment of the present invention, the oven-safe mould may be made of a material selected from the group consisting of aluminium, stainless steel, iron or another similar metal. In other preferred embodiments, the oven-safe mould can be made of silicone, so the baking time may be less than the time used with metal moulds, but always within the period of time indicated above.

In particular embodiments, in step g) the baking time is comprised between 10 and 120 minutes, preferably being between 20 and 100 minutes or 30 and 90 minutes, and being even more preferably between 35 and 70 minutes. Furthermore, in preferred embodiments, the baking temperature can be 170°C, 175°C, 180°C, 185°C, 190°C, 195°C or 200°C. The baking temperature depends on the baking time and the material of the oven mould used, since such material can influence heat transmission in the container, and therefore, the cooking of the dough in the container.

In the context of the present invention, ambient temperature is understood to be the temperature comprised between 18°C and 25°C, preferably between 20°C and 23°C, and even more preferably 22°C.

In preferred embodiments of the method object of the invention, the final mechanical properties herein are produced as a result of the kneading of the components described together with the coating that is distributed homogeneously over the inner surface of the container according to the first aspect of the invention. Thus, by mixing all the components of the dough together with the homogeneously distributed coating, combined effects appear that enhance the individual technical effects. These synergistic effects are responsible for the impermeability and the surprising resistance to fluids at a high temperature, preferably between 80°-98°C, over a period of 24 to 36 hours, without losing its mechanical properties.

In this way, the main advantages that can be drawn from the edible container object of this invention are a versatile product capable of containing very steamy food products, surprisingly highlighting the high temperatures and the time it can withstand them. Furthermore, the capacity of the container object of the invention to be stored for extended periods of time, preferably 20 to 40 days at ambient temperature, is also derived from these properties.

### Uses of the invention

In a third aspect, the invention relates to the use of an edible container according to the first aspect of the invention for containing a food product.

In other embodiments, the invention relates to the use of an edible container according to the first aspect of the invention for containing hot or cold fluids. In the context of the present invention, hot fluids are understood to mean those fluids having a temperature between 80°C and 98°C, as described hereinabove.

In a particular embodiment, the container object of the invention can contain a fluid food having a temperature of up to 98°C and a time of more than 24 hours, preferably being between 24 hours and 36 hours.

The main advantages associated with the present invention are the following:
1. Reduced consumption of plastic and cardboard cups and containers.
2. The container object of the invention is edible, so the end user can eat and drink as a result of the nature of the product used.
3. The container object of the invention is biodegradable and harmless to the environment.
4. The process for producing the object of the invention is a very inexpensive method both in terms of the cost of raw materials and the energy expenditure of the steps comprised in the method.
5. The container and the method object of the invention are environmentally sustainable since, taking into account that the container is edible, it greatly minimises the environmental impact of disposable products for food and beverage consumption.
6. It should be noted that the prior art existing today describes edible containers with a certain impermeability, but after this process, the result is a cup that is much more impermeable and resistant to higher temperatures for longer. This production method can also be automated in a professional production plant or with more developed technological equipment.

All the terms and embodiments described above are applicable to any aspect and embodiment of the invention. According to the present invention, the singular terms "the", "a" and "an" also refer to plural nouns, unless it is clear from the context that the term clearly refers to a singular noun. The term "comprises" or "comprising", as it is used herein, also describes "consists of" or "consisting of" in accordance with generally accepted patent practice.

### EXAMPLES

The following invention is described by means of the following examples, which should be interpreted as merely illustrative and not limiting of the scope of the invention.

### Example 1: Method of producing an edible cup

### 1. Preparing the dough:

The exact composition for this embodiment is 500 g of soft flour, 250 g of margarine, 125 g of sugar, 50 g of pasteurised egg.

It should be noted that kneading can be done either by hand or by machine.

In this preferred embodiment, the butter was cut into small squares and softened (not melted) in a microwave. With the flour and sugar, a sort of "volcano" was made with a hole in the middle, and the margarine and eggs were added into this hole and mixed until a homogeneous dough was produced.

This mixture was shaped into a roll (or cylinder) and wrapped in plastic wrap and placed in a refrigerator.

2. It was left in the refrigerator for 2 hours. The dough was then cut into equal parts with a thickness of between 2 and 3 cm. Guides were placed on each side of the dough cylinder to obtain pieces of the desired thickness (between 2 and 3 cm).

To prevent the dough from sticking to the work surface, parchment paper was used. Next, the dough was flattened with a rolling pin until producing pieces of dough with a thickness of 2 mm. The pieces were put back into the refrigerator for at least 1 hour. This step ensures that the resulting dough settles and becomes compact as a result of the fat that the margarine adds to the resulting dough.

3. After a period of time of at least 1 hour, the dough was cut with a dough cutter, forming a circular base and a crescent-shaped wall, but having flat and not pointed ends. Next, the side wall of a mould is lined with the pieces previously produced with the dough cutter. The resulting product was put back into the refrigerator to continue hardening for a period of between 1 and 2 hours.

After this time, the container produced in the previous step was put in an oven-safe mould and placed in an oven at a temperature of 200°C for 40 minutes.

After this, it was taken out of the oven and left to cool at ambient temperature for 3 hours and then removed from the mould.

These alternative materials can be aluminium, stainless steel, iron or another similar metal. If these more conductive moulds are used, the temperature should be reduced to 170°C and the time reduced to 10 to 12 minutes.
4. Once baked and removed from the mould, any leftover material is carefully removed and the product is left to cool on a rack.
5. In parallel, the coating is prepared. To do so, 400 ml of water are brought to a boil and 6 g of gelling product are diluted in another 100 ml of water. Once the water boils, the previous aqueous powder is added and mixed for 1 minute by stirring. After this, the resulting mixture is put over medium heat and stirred constantly for 8 minutes. The machine used during this process is similar to one that produces hair removal wax, producing the coating at a temperature of 34°C.
6. When the cup was at an ambient temperature of 22°C, the gelling composition was spread over the inner surface of the container.
7. After this process, the edge of the resulting cup was smoothened, and it was left to cool to withstand temperatures of up to 98°C.

## Claims

1. An edible container for containing food or fluids, having the shape of a hollow body that is composed of a dough comprising:
a) between 50% and 56% flour,
b) between 22% and 32% fat,
c) between 12% and 16% sugar, and
d) between 5% and 6% pasteurised egg or between 0.1% and 1% soy lecithin,
e) between 0.1% and 0.2% salt;
and wherein the container has on its inner surface a coating comprising:
a) between 99.3% and 99.5% water,
b) between 0.5% and 0.7% of a gelling composition.

2. The edible container according to claim 1, wherein the gelling composition comprises:
a) between 50% and 70% agar-agar,
b) between 29% and 49% arrowroot,
c) between 0.5% and 1% cream of tartar.

3. The edible container according to any one of claims 1 or 2, wherein the flour is selected from the group consisting of soft wheat flour, corn flour, fine corn flour, oat flour, rice flour or a combination thereof.

4. The edible container according to any one of claims 1 to 3, wherein the fat is selected from the group consisting of margarine, refined lard, sunflower oil or a combination thereof.

5. The edible container according to any one of claims 1 to 4, wherein the sugar has a particle size less than or equal to 600 microns.

6. The edible container according to any one of claims 1 to 5, comprising between 0.15% and 0.3% of at least one preservative and/or flavouring.

7. The edible container according to any one of claims 1 to 6, wherein the thickness of the wall of the container is comprised between 2 mm and 4 mm.

8. The edible container according to any one of claims 1 to 7, wherein the container has a height of between 3 cm and 14 cm.

9. The edible container according to any one of claims 1 to 8, wherein the container has a circular bottom and comprises a first truncated cone section that includes the bottom, a second truncated cone section, and a third truncated cone section that ends in an outwardly protruding perimeter rim with a rounded profile.

10. A method of producing an edible container according to claims 1 to 9, wherein the method comprises the following steps:
a) mixing an amount of between 50% and 56% of flour with an amount of between 12% and 16% of sugar until producing a first homogeneous mixture;
b) mixing an amount of between 5% and 6% of pasteurised egg or an amount of between 0.1 and 1% of soy lecithin, and an amount of between 22% and 32% of fat until producing a second homogeneous mixture,
c) mixing the first and the second mixture until producing a homogeneous dough;
d) letting the dough rest for a period of time of between 60 and 120 minutes at a temperature of between 3 and 8°C;
e) rolling out the dough until producing a dough with a thickness of between 2 mm and 4 mm;
f) shaping a container with a portion of the rolled-out dough;
g) placing the container produced in the previous step in an oven-safe mould and baking for a time of between 10 and 120 minutes at a temperature of between 170 and 200°C;
h) removing the container produced in the previous step from the mould and leaving it to cool on a rack for a time of between 45 and 180 minutes at a temperature of between 15 and 25°C;
i) producing the coating by means of the following sub-steps:
i.1) mixing between 99.3% and 99.5% of water with an amount of between 0.5% and 0.7% of a gelling composition,
i.2) heating to a temperature of between 95°C and 105°C and mixing for a time of between 30 and 180 seconds until producing a homogeneous solution;
i.3) leaving the homogeneous solution to cool until reaching a temperature of between 25 and 40°C;
j) evenly distributing the coating produced in the previous step on the inner surface of the container by means of a brush or by spraying;
k) leaving the container to cool for a period of time comprised between 30 and 60 minutes at a temperature of between 15 and 25°C.

11. The method according to claim 10, wherein shaping the container comprises:
- using a dough cutter to cut a first piece from the rolled-out dough portion;
- using a dough cutter to cut at least a second piece from the rolled-out dough portion;
- joining the first piece and at least the second piece by means of pressure to shape the container, wherein the first cut piece defines a bottom of the container and the second cut piece defines a wall of the container.

12. The method according to any one of claims 10 or 11, wherein the method comprises an additional step prior to step b) wherein an amount between 0.15% and 0.3% of at least one preservative and/or flavouring is added.

13. Use of an edible container according to any one of claims 1 to 9, containing a food product selected from the group consisting of a solid food or a fluid.

14. The use according to claim 13, wherein the container contains a fluid food having a temperature between 50°C and 98°C and for a time of between 24 and 36 hours.
